Europäisches Patentamt

European Patent Office

Office européen des brevets

(11) Numéro de publication: **0 534 867 B1**

(12) **FASCICULE DE BREVET EUROPEEN**

(45) Date de publication de fascicule du brevet: **29.03.95** (51) Int. Cl.⁶: **B01J 27/22**, C10G 35/06

(21) Numéro de dépôt: **92420290.6**

(22) Date de dépôt: **04.09.92**

(54) Préparation de catalyseur à partir d'oxydes métalliques par reduction et carburation partielle par les gaz reactionnels.

(30) Priorité: **06.09.91 FR 9112374**

(43) Date de publication de la demande:
**31.03.93 Bulletin 93/13**

(45) Mention de la délivrance du brevet:
**29.03.95 Bulletin 95/13**

(84) Etats contractants désignés:
**BE DE DK ES FR GB IT NL SE**

(56) Documents cités:
**EP-A- 0 120 798          EP-A- 0 179 490**
**US-A- 2 755 228          US-A- 4 271 041**
**US-A- 4 326 992          US-A- 4 515 763**

(73) Titulaire: **PECHINEY RECHERCHE (Groupe-ment d'Intérêt Economique géré par l'ordonnance du 23 Septembre 1967)**
**10, place des Vosges**
**Immeuble Balzac**
**La Défense 5**
**F-92400 Courbevoie (FR)**

(72) Inventeur: **Ledoux, Marc J.**
**11, rue d'Ussé**
**F-67000 Strasbourg (FR)**
Inventeur: **Guille, Jean-Louis**

**17, avenue des Vosges**
**F-67000 Strasbourg (FR)**
Inventeur: **Pham Huu, Cuong**
**18, rue de Copenhague**
**F-67000 Strasbourg (FR)**
Inventeur: **Dunlop, Hugh**
**2, rue Néron**
**F-38120 St Egreve (FR)**
Inventeur: **Prin, Marie**
**La Tuilerie,**
**Bâtiment A**
**F-38340 Moirans (FR)**

(74) Mandataire: **Jacquet, Michel et al**
**PECHINEY**
**28, rue de Bonnel**
**F-69433 Lyon Cédex 03 (FR)**

Rank Xerox (UK) Business Services
(3.10/3.09/3.3.3)

**Description**

DOMAINE DE L'INVENTION.

L'invention concerne un procédé de préparation d'un catalyseur de réactions chimiques ou pétrochimiques, composé d'oxyde de métaux lourds comprenant en surface des carbures et oxycarbures métalliques à grande surface spécifique. Ce catalyseur est particulièrement adapté au raffinage et à la transformation des produits pétroliers, notamment au réformage.

L'invention concerne également le catalyseur particulier obtenu par ce procédé.

ETAT DE LA TECHNIQUE.

La demande de brevet français publiée sous le n° 2 645 143 ( Péchiney Electrométallurgie ) décrit un procédé de fabrication de carbures de métaux lourds à surface spécifique élevée destinés à servir de catalyseurs pour l'industrie pétrochimique. Ces carbures sont obtenus en faisant réagir à relativement haute température sur un carbone à haute surface spécifique un composé volatil du métal lourd dont on veut obtenir le carbure. Le carbure garde ainsi en quelque sorte la mémoire de la surface spécifique du carbone de départ et conserve une surface active plus élevée que les carbures connus dans l'art antérieur, ce qui le rend bien adapté à son utilisation comme catalyseur.

Des recherches ultérieures menées par la même équipe de chercheurs ont mis en évidence le rôle essentiel joué dans le mécanisme catalytique par les oxycarbures présents en surface et identifiés par analyse XPS (X-Ray Photoelectron Spectroscopy). La demande de brevet français n° 2 666 520 ( GIE Péchiney Recherche ) décrit ainsi un traitement d'oxydation ménagée à une température de l'ordre de 300°C, pratiqué sur les carbures métalliques préparés selon la demande citée ci-dessus qui permet l'obtention de ces oxycarbures, responsables, ainsi qu'il a été dit, de l'activité catalytique. Ce traitement doit être suivi d'une période de réactivation à 350°C dans un mélange hydrocarbure-hydrogène qui est en général le mélange que l'on veut, dans les opérations de réformage, soumettre à l'isomérisation.

Le brevet des Etats-Unis n° 4 515 763 ( Boudart ) décrit, lui aussi un procédé de fabrication de carbures (et de nitrures) de métaux lourds dont le molybdène et le vanadium destinés à la catalyse. Ce procédé s'inspire d'un principe opposé à celui de la demande française n° 2 645 143 puisque c'est ici un gaz carburant, en général du méthane, dilué dans de l'hydrogène que l'on fait réagir sur l'oxyde métallique solide. Le procédé implique, en outre:

- un cycle de montée en température précis, entre 768 et 1000 K,
- une concentration en hydrocarbure relativement élevée, au moins 10 % en volume,
- une trempe une fois la carburation complète,
- et de préférence un traitement de passivation très ménagé dans un gaz faiblement oxydant, le produit obtenu étant, du fait de sa préparation en milieu fortement réducteur, pyrophorique au contact de l'air.

OBJET DE L'INVENTION.

Les inventeurs se sont posé la question suivante: on observe par analyse XPS sur les catalyseurs à base de carbure de molybdène, mais aussi de vanadium et de tungstène après qu'ils aient été traités à l'air à 300°C, puis réactivés sous mélange hydrocarbure-hydrogène à 350°C, une phase oxycarbure, responsable de l'activité catalytique. Cette phase ne peut-elle pas être obtenue directement par réaction à basse température entre d'une part le mélange à réformer, par exemple de n-hexane/hydrogène et d'autre part l'oxyde de molybdène massique $MoO_3$ ?

Si la réponse à cette question est affirmative, il en découle une simplification notable des processus puisque la partie active du catalyseur est préparée in situ, en présence du milieu réactionnel et que l'on évite ainsi les précautions de manipulation du produit sensible aux agents extérieurs qu'est un catalyseur.

Cependant, l'enseignement du brevet Boudart ne permettait guère d'espérer une réponse positive. D'abord, il vise la transformation intégrale de l'oxyde en carbure, alors que le but de la présente invention est une couche mixte de carbure et d'oxycarbure à la surface de l'oxyde. Ensuite, les températures sont plus élevées, le cycle de chauffage est bien précis, il faut une trempe à la fin du traitement. Enfin, l'utilisation d'hydrocarbures plus lourds que le méthane y est déconseillée, comme susceptible de former des aggrégats de carbone en surface.

DESCRIPTION DE L'INVENTION.EXEMPLES.

L'invention concerne un catalyseur utilisable en chimie et en pétrochimie pour la transformation chimique d'un mélange gazeux réactionnel contenant au moins un composé carboné, catalyseur constitué d'un coeur en oxyde d'un métal de transition (3b, 4b, 5b, 6b, 7b, 8 des séries 4, 5 , 6 de la classification périodique des éléments), d'un métal des terres rares ou d'un actinide, recouvert d'une couche superficielle d'un mélange de carbure et d'oxycarbure du métal considéré. L'invention concerne également le procédé de fabrication d'un tel catalyseur caractérisé en ce que la couche superficielle de carbure et d'oxycarbure est développée par réduction et carburation de l'oxyde par le mélange gazeux réactionnel que l'on fait passer sur l'oxyde dans les conditions de composition, de température et de pression de la transformation chimique catalysée.

Dans une variante du catalyseur ci-dessus, le coeur, au lieu d'être constitué d'oxyde, est constitué du métal recouvert d'une couche d'oxyde, elle-même recouverte d'une couche superficielle d'un mélange de carbure et d'oxycarbure du métal considéré.

Le procédé de fabrication du catalyseur objet de la variante ci-dessus est caractérisé en ce que le métal est tout d'abord recouvert d'une couche d'oxyde par un traitement d'oxydation approprié et en ce que la couche superficielle de carbure et d'oxycarbure est ensuite développée par réduction et carburation de la couche d'oxyde par le mélange gazeux réactionnel que l'on fait passer sur l'oxyde dans les conditions de composition, de température et de pression de la transformation chimique catalysée.

L'invention concerne enfin l'utilisation des catalyseurs de structure particulière obtenus par le procédé pour le réformage d'hydrocarbures.

La mise en oeuvre de l'invention est très simple:

Pour la fabrication des catalyseurs à coeur d'oxyde, on utilise de l'oxyde massique du métal considéré, sous forme de poudre ou de granulés, par exemple, que l'on place dans le réacteur sous un flux du mélange gazeux à réformer et que l'on porte à la température de réformage.

Pour la fabrication des catalyseurs à coeur métallique, la couche d'oxyde est développée par un traitement oxydant de la poudre métallique dans un courant d'air ou de gaz contenant de l'oxygène à une température variant selon les métaux, mais le plus souvent comprise entre 300 et 450 ° C pendant une durée de 3 à 15 heures. La poudre ainsi oxydée en surface est ensuite placée dans le réacteur sous le flux du mélange gazeux à réformer et portée à la température de réformage.

De préférence, la poudre métallique est, préalablement au traitement oxydant, traitée sous un flux d'hydrogène pour réduire les impuretés adsorbées en surface. Ce traitement a lieu à une température comprise entre 600 et 800 ° C pendant une durée de 1 à 2 heures.

Les exemples développés ci-après concernent l'oxyde de molybdène $MoO_3$, mais on peut, sans sortir du cadre de cette invention, utiliser des oxydes des métaux de transition, des terres rares ou des actinides, avec lesquels des résultats comparables peuvent être obtenus.

EXEMPLE 1

Dans cet exemple, le produit à réformer est le n-hexane dilué dans de l'hydrogène. La pression partielle du n-hexane est de 5 mm de mercure (666,6 Pa). La pression totale dans le réacteur étant la pression atmosphérique, le pourcentage volumique de n-hexane dans le mélange est donc de 5/760 = 0,66 % environ. Le débit gazeux total est de 40 $cm^3$/min. La quantité de $MoO_3$ est de 200,5 mg. La température de réaction est de 350 ° C.

Le tableau 1 ci dessous donne les résultats obtenus en fonction du temps.

Dans ce tableau, le temps écoulé depuis le début de l'opération est porté en tête des colonnes. Les lignes indiquent successivement:
- le taux de conversion en % de molécules de n-hexane transformées soit par isomérisation, soit par craquage;
- la sélectivité en % de molécules isomérisées par rapport au total des molécules transformées;
- les pourcentages des espèces chimiques isomérisées rapportés au total des isomères obtenus;
  DM-2,2B       = diméthyl-2,2 butane + diméthyl-2,3 butane
  M2P         = méthyl-2 pentane
  M3P         = méthyl-3 pentane
  MCP         = méthylcyclopentane
  BEN + CYC   = benzène + cyclohexane.
  (il faut noter que les valeurs de la ligne DM-2,2B comprennent aussi les teneurs en DM-2,3B, diméthyl-2,3 butane)

- les pourcentages des espèces chimiques craquées obtenues rapportés au total des produits craqués obtenus;

## Tableau 1

| Temps (h) | 1,0 | 1,5 | 3,0 | 4,0 | 8,0 | 9,0 | 24,0 | 31,5 | 48,0 | 51,0 | 53,0 |
|---|---|---|---|---|---|---|---|---|---|---|---|
| Conversion (%) | 0 | 3,16 | 38,36 | 51,32 | 71,48 | 68,79 | 71,57 | 73,02 | 59,76 | 68,96 | 70,00 |
| Sélectivité C6 (%) | | 59 | 64 | 62 | 63 | 66 | 77 | 77 | 83 | 80 | 80 |
| **Sélectivité des produits de réaction (%)** | | | | | | | | | | | |
| DM-2,2B | | 1,2 | 3,0 | 3,3 | 4,1 | 3,9 | 4,4 | 4,9 | 3,5 | 4,3 | 4,3 |
| M2P | | 53,6 | 61,6 | 60,7 | 59,4 | 59,9 | 59,4 | 58,7 | 60,7 | 58,9 | 59,6 |
| M3P | | 30,6 | 32,1 | 32,8 | 33,4 | 33,3 | 34,1 | 34,3 | 34,1 | 34,7 | 34,1 |
| MCP | | 14,5 | 2,0 | 1,6 | 1,2 | 1,2 | 0,9 | 0,9 | 0,9 | 0,9 | 0,9 |
| BEN + CYC | | 0 | 1,3 | 1,5 | 1,9 | 1,7 | 1,2 | 1,2 | 0,8 | 1,1 | 1,1 |
| C5 + C1 | | 12 | 10 | 11 | 15 | 14 | 24 | 24 | 24 | 27 | 28 |
| C4 + C2 | | 19 | 18 | 18 | 20 | 20 | 25 | 26 | 26 | 29 | 29 |
| 2 C3 | | 67 | 72 | 71 | 65 | 66 | 50,5 | 49 | 48,5 | 43,0 | 42 |
| 3 C2 | | 1 | 0 | 0 | 0 | 0 | 0,5 | 1 | 1,1 | 0,8 | 1 |
| 6 C1 | | 0 | 0 | 0 | 0 | 0 | 0 | 0 | 0,4 | 0,2 | 0 |

L'examen de ce tableau permet de faire les commentaires suivants:

1°) le nombre de molécules de n-hexane transformées est nul pendant la première heure de la réaction (conversion = 0). Après deux heures environ sous flux de n-hexane à 350°C, on constate que le catalyseur commence à être actif, ce qui traduit une modification importante de sa surface. Cette modification correspond à une réduction de l'oxyde de valence 6 inactif en ses sous-oxydes qui, à leur tour, se transforment en oxycarbures réactifs par réaction avec le mélange réactionnel (n-hexane/hydrogène)

2°) la sélectivité en isomères $C_6$ est aussi modifiée en fonction du temps et passe de 59 à 80 %.

Ces observations permettent de formuler l'hypothèse suivante pour expliquer le comportement du catalyseur:

- le premier régime (entre 0 et 2 heures de réaction environ) durant lequel le catalyseur n'est pas actif est attribué à une étape de réduction rapide de l'oxyde $MoO_3$ en son sous-oxyde $MoO_2$ par le mélange réactionnel. L'activité mesurée après une heure de réaction est nulle car $MoO_3$ subsiste en produit majoritaire comme le montre le diagramme de diffraction X qui est identique au diagramme de l'oxyde de départ. Cependant, l'oxyde de molybdène de valence 6 de départ de couleur gris clair est devenu après 1 heure de réaction gris bleu foncé ce qui traduit une réduction partielle de l'oxyde en surface, indétectable aux rayons X. Après deux heures de réaction, le $MoO_3$ reste toujours le composé majoritaire du catalyseur, néanmoins, on commence à voir apparaître dans le diagramme de diffraction deux nouvelles phases qui sont du $MoO_2$ et du $Mo_2C$ ou du $Mo_2O_xC_y$ (oxycarbure que les rayons X ne permettent pas de distinguer du carbure).
- le deuxième régime durant lequel la réactivité du catalyseur est fortement augmentée (entre 2 heures et 8 heures de réaction à 350°C) est attribué à une transformation progressive du $MoO_2$ en une

nouvelle espèce d'oxycarbure par incorporation d'un atome de carbone dans le réseau de l'oxyde. Cette hypothèse est corroborée par les diagrammes de diffraction aux rayons X sur des échantillons de catalyseur prélevés à des temps successifs de la réaction. Ces diagrammes montrent que la phase $MoO_2$, après 3 heures de réaction, est devenue majoritaire au détriment de la phase $MoO_3$ qui a pratiquement disparu. En revanche, la phase carbure ou oxycarbure (que l'on ne peut distinguer en diffraction X) voit sa proportion relative augmenter proportionnellement à la durée de la réaction, ce qui coïncide parfaitement avec l'augmentation du taux de conversion observé.

Une autre observation tirée des diagrammes de diffraction X permet de confirmer que la phase active est bien la phase oxycarbure ou carbure et non l'oxyde $MoO_2$. Après 3 heures de réaction, le $MoO_2$ est pratiquement le seul composé majoritaire dans le catalyseur; or la réactivité du catalyseur continue à augmenter fortement en fonction du temps. Cela montre que la phase active responsable de l'isomérisation n'est pas le $MoO_2$, car, alors, le maximum de réactivité devrait être atteint dès que le $MoO_2$ est prépondérant, c'est-à-dire après environ 3 heures.

- au terme de ce deuxième régime, le catalyseur atteint un palier de stabilisation entre les phases d'oxyde et d'oxycarbure superficielles et le taux de conversion reste inchangé. Cependant, la sélectivité en isomères C6 reste faible ( de l'ordre de 60 %). Cette faible sélectivité peut s'expliquer par le fait que la surface active du catalyseur est influencée par la composition des couches plus profondes très riches en oxygène. Ces couches riches en oxygène induisent un craquage "acide" du réactif en produit C3. En effet, dans le catalyseur à base de carbure il existe une phase superficielle (quelques couches) constituée d'oxyde et d'oxycarbure en équilibre et une phase de coeur en carbure. Au contraire, dans le cas d'un catalyseur à base d'oxyde, il existe une phase d'oxyde et d'oxycarbure en équilibre, supportée et influencée par un coeur d'oxyde très riche en oxygène.

Après environ 8 heures de réaction, le taux de conversion du n-hexane reste stable en fonction du temps; par contre, la sélectivité en isomères C6 augmente progressivement pour atteindre 80 % au bout d'une trentaine d'heures sous flux réactionnel. L'évolution de la sélectivité s'explique ainsi: au fur et à mesure de l'avancement de la réaction, il se produit un échange entre les atomes de carbone de la surface et des couches sous-jacentes et les atomes d'oxygène des couches plus profondes. Cet échange contribue à atténuer l'influence de l'oxyde sur la phase d'oxycarbure superficielle réactive et permet ainsi d'améliorer la sélectivité en isomères C6.

EXEMPLE 2

Dans cet exemple, on est parti d'une poudre de molybdène métallique de granulométrie comprise entre 50 et 80 $\mu$m. Cette poudre a été d'abord traitée sous un flux d'hydrogène pendant 2 heures à 600°C, puis oxydée sous flux d'air à une température de 350°C pendant 14 heures. Le catalyseur a été refroidi à l'ambiante toujours sous flux d'air. Un mélange de n-hexane et d'hydrogène de même composition et dans les mêmes conditions que celles de l'exemple 1 a été envoyé sur le catalyseur. Les résultats figurent dans le tableau 2 ci-après, avec les mêmes notations que dans le tableau 1

TABLEAU 2

| Temps (h) | 3 | 4 | 5 | 6 |
|---|---|---|---|---|
| Conversion (%) | 39 | 35 | 39 | 38 |
| Sélect.C6 (%) | 92 | 93 | 93 | 93 |

Sélectivité des produits de réaction (%)

Sélectivité des isomères C6 (%)

| DM-2,2B | 2,1 | 2 | 2 | 2 |
|---|---|---|---|---|
| M2P | 63,1 | 63,8 | 63,2 | 63 |
| M3P | 33,4 | 32,8 | 33,7 | 33,9 |
| MCP | 0,8 | 0,9 | 0,7 | 0,7 |
| BEN +CYC | 0,5 | 0,5 | 0,5 | 0,5 |

Sélectivité des produits de craquage (%)

| C5+C1 | 30 | 28 | 32 | 31 |
|---|---|---|---|---|
| C4+C2 | 32 | 32 | 35 | 35 |
| 2C3 | 38 | 40 | 33 | 34 |
| 3C2 | 0 | 0 | 0 | 0 |
| 6C1 | 0 | 0 | 0 | 0 |

On note, par comparaison avec l'exemple 1, que le taux de conversion est plus faible, mais qu'en revanche la sélectivité est améliorée.

EXEMPLE 3

Dans cet exemple, on a comparé les vitesses spécifiques des catalyseurs à base de $Mo_2C$ préparés selon le procédé de la demande française n° 89 04433 et activés par un traitement oxydant selon le procédé de la demande française n° 90 11633 et celles des catalyseurs objets de la présente invention. Une masse de 200 mg de $Mo_2C$ est oxydée sous flux d'air à 350°C pendant 14 heures puis réactivée sous mélange de n-hexane et d'hydrogène à 350°C pendant 7 heures. Le catalyseur ainsi activé est transporté sous hydrogène dans une boite à gants pour être pesé et fractionné en masses de 10 mg utilisées pour une série de tests à faible taux de conversion (entre 10 et 20 %). Le catalyseur à base d'oxyde $MoO_3$ est activé directement selon le procédé de la présente invention à 350°C sous flux de n-hexane/hydrogène sans traitement oxydant à l'air, le reste du mode opératoire étant identique à celui appliqué pour les catalyseurs à base de carbure de molybdène.

La vitesse spécifique, qui est une mesure de l'activité du catalyseur, est calculée par la formule suivante:

$$r = T . (F/m)$$

avec:

    r :      vitesse spécifique en mole/g/s

    T :      taux de conversion en %

    F :      flux du réactif en mole/s

    m :     masse du catalyseur en g.

Les mesures comparatives faites sur les deux types de catalyseurs montrent que le catalyseur fait à partir d'oxyde de molybdène présente une vitesse spécifique de $32000.10^{-10}$ mole/g.s contre des valeurs variant de 4800 à $14000 .10^{-10}$ mole/g.s selon leur surface spécfique, pour les catalyseurs à base de carbure de molybdène.

Il apparait donc que la vitesse spécifique des catalyseurs base oxyde est nettement supérieure à celle des catalyseurs base carbure. En revanche, la sélectivité des catalyseurs base oxyde: 90 % à faible taux de conversion et 80 % à fort taux de conversion est inférieure à celle observée sur les catalyseurs base carbure: 93-94 % à faible taux de conversion et 87-92 % à fort taux de conversion.

## Revendications

1.    Procédé de fabrication d'un catalyseur utilisable en chimie et en pétrochimie pour la transformation chimique d'un mélange gazeux réactionnel contenant au moins un composé carboné, constitué d'un coeur en oxyde d'un des métaux de transition, des terres rares ou d'un actinide, recouvert d'une couche superficielle d'un mélange de carbure et d'oxycarbure du métal considéré caractérisé en ce que la couche superficielle de carbure et d'oxycarbure est développée par réduction et carburation de l'oxyde par le mélange gazeux réactionnel que l'on fait passer sur l'oxyde dans les conditions de composition, de température et de pression de la transformation chimique catalysée.

2.    Procédé de fabrication du catalyseur utilisable en chimie et en pétrochimie pour la transformation chimique d'un mélange gazeux réactionnel contenant au moins un composé carboné, constitué d'un coeur en un des métaux de transition, des terres rares ou d'un actinide, recouvert d'une couche d'oxyde elle-même recouverte d'une couche superficielle d'un mélange de carbure et d'oxycarbure du métal considéré, caractérisé en ce que le métal est tout d'abord recouvert d'une couche d'oxyde par un traitement d'oxydation approprié et en ce que la couche superficielle de carbure et d'oxycarbure est ensuite développée par réduction et carburation de la couche d'oxyde par le mélange gazeux réactionnel que l'on fait passer sur l'oxyde dans les conditions de composition, de température et de pression de la transformation chimique catalysée.

3.    Procédé selon la revendication 2 caractérisé en ce que le traitement d'oxydation consiste à oxyder le métal dans un courant d'air ou de gaz contenant de l'oxygène à une température variant selon les métaux, mais le plus souvent comprise entre 300 et 450°C pendant une durée de 3 à 15 heures.

4.    Procédé selon l'une des revendications 2 ou 3 caractérisé en ce que le traitement d'oxydation est précédé d'un traitement sous un flux d'hydrogène à une température comprise entre 600 et 800°C pendant une durée de 1 à 2 heures.

**5.** Procédé selon l'une des revendications 1 à 4 caractérisé en ce que l'oxyde utilisé ou formé par oxydation est l'oxyde de molybdène $MoO_3$.

**6.** Procédé selon l'une des revendications 1 à 5, caractérisé en ce que le mélange gazeux réactionnel est un mélange d'hydrogène et d'un hydrocarbure et que la transformation chimique est une isomérisation ou réformage de l'hydrocarbure.

**7.** Procédé selon la revendication 6, caractérisé en ce que le mélange gazeux réactionnel est un mélange d'hydrogène et de n-hexane.

**8.** Catalyseur utilisable en chimie et en pétrochimie pour la transformation chimique d'un mélange gazeux réactionnel contenant au moins un composé carboné, constitué d'un coeur en oxyde d'un des métaux de transition, des terres rares ou d'un actinide, recouvert d'une couche superficielle d'un mélange de carbure et d'oxycarbure du métal considéré.

**9.** Catalyseur utilisable en chimie et en pétrochimie pour la transformation chimique d'un mélange gazeux réactionnel contenant au moins un composé carboné, constitué d'un coeur en un métal de transition, des terres rares ou en un actinide, recouvert d'une couche d'oxyde, elle-même recouverte d'une couche superficielle d'un mélange de carbure et d'oxycarbure du métal considéré.

**10.** Catalyseur selon l'une des revendications 8 ou 9, caractérisé en ce que le métal ou l'oxyde métallique constituant le coeur est le molybdène ou l'oxyde de molybdène $MoO_3$.

**11.** Procédé de réformage d'un mélange gazeux contenant au moins un hydrocarbure comprenant les étapes suivantes:
a) faire réagir un oxyde d'un métal de transition, d'un métal des terres rares ou d'un actinide avec ledit mélange gazeux dans les conditions de composition, de température, de pression de la réaction de réformage de façon à former un catalyseur comprenant un coeur d'oxyde et une couche superficielle de carbure et d'oxycarbure;
b) laisser la réaction de réformage se poursuivre dans lesdites conditions de composition, de température, de pression en présence du catalyseur ainsi formé.

**Claims**

**1.** A process for the production of a catalyst which can be used in chemistry and in petrochemistry for the chemical transformation of a reaction gas mixture containing at least one carbon-containing compound constituted by a core of oxide of one of the transition metals, rare earths or an actinide, covered with a surface layer of a mixture of carbide and oxycarbide of the metal in question, characterised in that the surface carbide and oxycarbide layer is developed by reduction and carburisation of the oxide by the reaction gas mixture, which is passed over the oxide under the pressure, temperature and composition conditions of the catalysed chemical transformation.

**2.** A process for the production of the catalyst which can be used in chemistry and in petrochemistry for the chemical transformation of a reaction gas mixture containing at least one carbon-containing compound, constituted by a core of one of the transition metals, rare earths or an actinide, covered with an oxide layer, itself covered by a surface layer of a mixture of carbide and oxycarbide of the metal in question, characterised in that the metal is firstly covered with an oxide layer by an appropriate oxidation treatment and in that the surface carbide and oxycarbide layer is then developed by reduction and carburisation of the oxide layer by the reaction gas mixture which is passed over the oxide under the pressure, temperature and composition conditions of the catalysed chemical transformation.

**3.** A process according to Claim 2, characterised in that the oxidation treatment consists in oxidising the metal in an air or gas flow containing oxygen at a temperature which varies as a function of the metals, but usually between 300 and 450°C for a duration of between 3 and 15 hours.

**4.** A process according to either of Claims 2 and 3, characterised in that the oxidation treatment is preceded by a treatment in a hydrogen flow at a temperature of between 600°C and 800°C for a duration of 1 to 2 hours.

5. A process according to any one of Claims 1 to 4, characterised in that the oxide used or formed by oxidation is molybdenum oxide $MoO_3$.

6. A process according to any one of Claims 1 to 5, characterised in that the reaction gas mixture is a mixture of hydrogen and a hydrocarbon and in that the chemical transformation is isomerisation or reforming of the hydrocarbon.

7. A process according to Claim 6, characterised in that the reaction gas mixture is a mixture of hydrogen and n-hexane.

8. A catalyst which can be used in chemistry and in petrochemistry for the chemical transformation of a reaction gas mixture containing at least one carbon-containing compound, constituted by a core of an oxide of one of the transition metals, rare earths or an actinide, covered by a surface layer of a mixture of carbide and oxycarbide of the metal in question.

9. A catalyst which can be used in chemistry and in petrochemistry for the chemical transformation of a reaction gas mixture containing at least one carbon-containing compound, constituted by a core of a transition metal, rare earths or an actinide, covered by at oxide layer, itself covered by a surface layer of a mixture of carbide and oxycarbide of the metal in question.

10. A catalyst according to either of Claims 8 and 9, characterised in that the metal or metal oxide constituting the core is molybdenum or molybdenum oxide $MoO_3$.

11. A process for reforming a gas mixture containing at least one hydrocarbon comprising the following stages:
    a) reacting an oxide of a transition metal, a rare earths metal or an actinide with said gas mixture under reforming pressure reaction, temperature and composition conditions in such a way as to form a catalyst comprising an oxide core and a surface carbide and oxycarbide layer;
    b) allowing the reforming reaction to take place under said composition, temperature and pressure conditions in the presence of the catalyst thus formed.

**Patentansprüche**

1. Verfahren zur Herstellung von Katalysatoren, die in der Chemie und in der Petrochemie zur chemischen Umwandlung gasförmiger Reaktionsgemische, die mindestens eine Kohlenstoffverbindung enthalten, geeignet sind und aus einem Kern aus einem Oxid eines Übergangsmetalls, eines Seltenerdmetalls oder eines Metalls der Actinoiden, der mit einer Oberflächenschicht aus einem Gemisch von Carbid und Oxycarbid des betreffenden Metalls überzogen ist, bestehen,
   dadurch gekennzeichnet, daß die Oberflächenschicht von Carbid und Oxycarbid durch Reduktion und Carburierung des Oxids durch das gasförmige Reaktionsgemisch erzeugt wird, das unter den Bedingungen der Zusammensetzung, der Temperatur und des Drucks der katalytischen chemischen Umwandlung über das Oxid geleitet wird.

2. Verfahren zur Herstellung von Katalysatoren, die in der Chemie und in der Petrochemie zur chemischen Umwandlung gasförmiger Reaktionsgemische, die mindestens eine Kohlenstoffverbindung enthalten, geeignet sind und aus einem Kern aus einem Übergangsmetall, einem Seltenerdmetall oder einem Metall der Actinoiden, der mit einer Oxidschicht überzogen ist, die ihrerseits mit einer Oberflächenschicht aus einem Gemisch von Carbid und Oxycarbid des betreffenden Metalls überzogen ist, besteht,
   dadurch gekennzeichnet, daß das Metall zunächst durch eine geeignete Oxidationsbehandlung mit einer Oxidschicht überzogen wird und daß die Oberflächenschicht von Carbid und Oxycarbid anschließend durch Reduktion und Carburierung der Oxidschicht durch das gasförmige Reaktionsgemisch erzeugt wird, das unter den Bedingungen der Zusammensetzung, der Temperatur und des Drucks der katalytischen chemischen Umwandlung über das Oxid geleitet wird.

3. Verfahren nach Anspruch 2, dadurch gekennzeichnet, daß die Oxidationsbehandlung in einer Oxidation des Metalls in einem Luftstrom oder einem Gasstrom, der Sauerstoff enthält, bei einer Temperatur, die in Abhängigkeit vom jeweiligen Metall variiert, jedoch zumeist im Bereich von 300 bis 450 °C liegt, während einer Dauer von 3 bis 15 h besteht.

4. Verfahren nach Anspruch 2 oder 3, dadurch gekennzeichnet, daß vor der Oxidationsbehandlung eine Behandlung unter einem Wasserstoffstrom bei einer Temperatur von 600 bis 800 °C während einer Dauer von 1 bis 2 h vorgenommen wird.

5. Verfahren nach einem der Ansprüche 1 bis 4, dadurch gekennzeichnet, daß das verwendete oder durch Oxidation gebildete Oxid Molybdänoxid $MoO_3$ ist.

6. Verfahren nach einem der Ansprüche 1 bis 5, dadurch gekennzeichnet, daß das gasförmige Reaktionsgemisch ein Gemisch von Wasserstoff und einem Kohlenwasserstoff ist und die chemische Umwandlung in einer Isomerisierung oder Reformierung des Kohlenwasserstoffs besteht.

7. Verfahren nach Anspruch 6, dadurch gekennzeichnet, daß das gasförmige Reaktionsgemisch ein Gemisch von Wasserstoff und n-Hexan ist.

8. Katalysatoren, die in der Chemie und Petrochemie zur chemischen Umwandlung eines gasförmigen Reaktionsgemischs, das mindestens eine Kohlenstoffverbindung enthält, geeignet sind und aus einem Kern aus einem Oxid eines Übergangsmetalls, eines Seltenerdmetalls oder eines Metalls der Actinoiden, der mit einer Oberflächenschicht aus einem Gemisch von Carbid und Oxycarbid des betreffenden Metalls überzogen ist, bestehen.

9. Katalysatoren, die in der Chemie und Petrochemie zur chemischen Umwandlung eines gasförmigen Reaktionsgemischs, das mindestens eine Kohlenstoffverbindung enthält, geeignet sind und aus einem Kern aus einem Übergangsmetall, einem Seltenerdmetall oder einem Metall der Actinoiden, der mit einer Oxidschicht überzogen ist, die ihrerseits mit einer Oberflächenschicht aus einem Gemisch von Carbid und Oxycarbid des betreffenden Metalls überzogen ist, bestehen.

10. Katalysatoren nach Anspruch 8 oder 9, dadurch gekennzeichnet, daß das Metall oder Metalloxid, das den Kern darstellt, Molybdän oder Molybdänoxid MoO3 ist.

11. Verfahren zur Reformierung eines gasförmigen Gemischs, das mindestens einen Kohlenwasserstoff enthält, das folgende Schritte umfaßt:
a) Umsetzung eines Oxids eines Übergangsmetalls, eines Seltenerdmetalls oder eines Metalls der Actinoiden mit dem Gasgemisch unter den Bedingungen der Zusammensetzung, der Temperatur und des Drucks der Reformierungsreaktion in der Weise, daß ein Katalysator erzeugt wird, der einen Kern aus Oxid und eine Oberflächenschicht aus Carbid und Oxycarbid aufweist;
b) Durchführung der Reformierungsreaktion unter diesen Bedingungen der Zusammensetzung, der Temperatur und des Drucks in Gegenwart des so gebildeten Katalysators.